Europäisches Patentamt

European Patent Office

Office européen des brevets

(11) Veröffentlichungsnummer: **0 408 541 A1**

## (12) EUROPÄISCHE PATENTANMELDUNG

(21) Anmeldenummer: 90890205.9

(22) Anmeldetag: 05.07.90

(51) Int. Cl.5: **F16H 19/04**, A01G 25/09

(30) Priorität: 13.07.89 AT 1706/89

(43) Veröffentlichungstag der Anmeldung:
16.01.91 Patentblatt 91/03

(84) Benannte Vertragsstaaten:
DE FR GR IT NL

(71) Anmelder: **Röhren- und Pumpenwerk Rudolf Bauer Aktiengesellschaft**

**A-8570 Voitsberg, Steiermark(AT)**

(72) Erfinder: **Seebacher, Franz**
**Nepomukgasse 16**
**A-8045 Graz(AT)**

(74) Vertreter: **Piso, Eberhard, Dr.**
**Patentanwälte Dipl.-Ing. Herbert C.E. Krause**
**Dr. Eberhard Piso Gluckgasse 1 Postfach**
**328**
**A-1015 Wien 1(AT)**

(54) **Statischer Kompaktantrieb.**

(57) Kompaktantrieb mit einer Triebstockstange (2) und zwei mit dieser in Eingriff stehenden Triebstockrädern (3,4), wobei die Triebstockstange (2) und die Triebstockräder (3,4) in einem von Druckmedium durchströmten Gehäuse (1) angeordnet sind, die Triebstockstange (2) mit einer druckmediumbeaufschlagbaren Vorrichtung verbunden ist und von dieser im Gehäuse hin- und herbewegt wird, wobei das Druckmedium vom Gehäuse in die Vorrichtung strömen kann und umgekehrt, die Achsen (14,15) der Triebstockräder (3,4) aus dem Gehäuse (1) geführt sind und jede Achse (14,15) außerhalb des Gehäuses (1) ein mit einem an sich bekannten Freilauf (17,18) versehenes Ritzel (19,20) aufweist, wobei die Freiläufe (17,18) unterschiedliche Sperrichtungen haben und die beiden Ritzel (19,20) mit einem Abtriebsrad (22) verbunden sind.

FIG. 1

Die Erfindung betrifft einen Kompaktantrieb mit einer Tribstockstange und zwei mit dieser in Eingriff stehenden Triebstockrädern.

Antriebe zur Umwandlung oszillierender translatorischer Bewegungen in eine kontinuierliche Rotationsbewegung unter Verwendung von Zahnstange und Zahnrädern sind bekannt.

Die DE-OS 3 546 276 versieht zum Erzielen einer gleichsinnigen Rotationsbewegung die Antriebsräder mit Freiläufen, sodaß die Schwenkbewegung der Räder abwechselnd auf eine der beiden Wellen übertragen wird.

Auch die DE-PS 2 649 661 zeigt eine Kraftübertragungseinheit zum Umsetzen einer Hin- und Herbewegung in eine Drehbewegung.

Aufgabe der Erfindung ist es einen Antrieb dieser Art, insbesondere für Beregnungsmaschinen, zu schaffen, der einen einfachen Aufbau hat und unter Verwendung eines Druckmediums eine sichere Funktionsweise garantiert.

Die Erfindung löst die Aufgabe dadurch, daß die Triebstockstange und die Triebstockräder in einem von Druckmedium durchströmten Gehäuse angeordnet sind, daß die Triebstockstange mit einer druckmediumbeaufschlagbaren Vorrichtung verbunden ist und von dieser im Gehäuse hin- und herbewegt wird, wobei das Druckmedium vom Gehäuse in die Vorrichtung strömen kann und umgekehrt, daß die Achsen der Triebstockräder aus dem Gehäuse geführt sind und jede Achse außerhalb des Gehäuses ein mit einem an sich bekannten Freilauf versehenes Ritzel aufweist, wobei die Freiläufe unterschiedliche Sperrichtungen haben, und daß die beiden Ritzel mit einem Abtriebsrad verbunden sind.

Ein anderes Merkmal der Erfindung ist es, daß die Ritzel Kettenritzel und das Abtriebsrad ein Kettenrad ist und daß die Ritzel mit dem Kettenrad über eine Kette verbunden sind.

Ein weiteres Merkmal der Erfindung ist es, daß die Vorrichtung ein in einem Zylinder geführter Kolben oder eine im Zylinder geordnete Membran ist, der (die) mit einer Steuerstange und diese mit einem Umsteuerventil verbunden ist.

Ein anderes, weiteres Merkmal der Erfindung ist: es, daß das Umsteuerventil über das Druckmedium mit dem Zylinder und mit dem Gehäuse in Verbindung steht und daß das Gehäuse im Bereich der Triebstockräder eine Öffnung zum Einspeisen des vom Umsteuerventil kommenden Druckmediums hat.

Die Erfindung wird nun an Hand eines Ausführungsbeispieles unter Zuhilfenahme der angeschlossenen Zeichnung näher beschrieben.

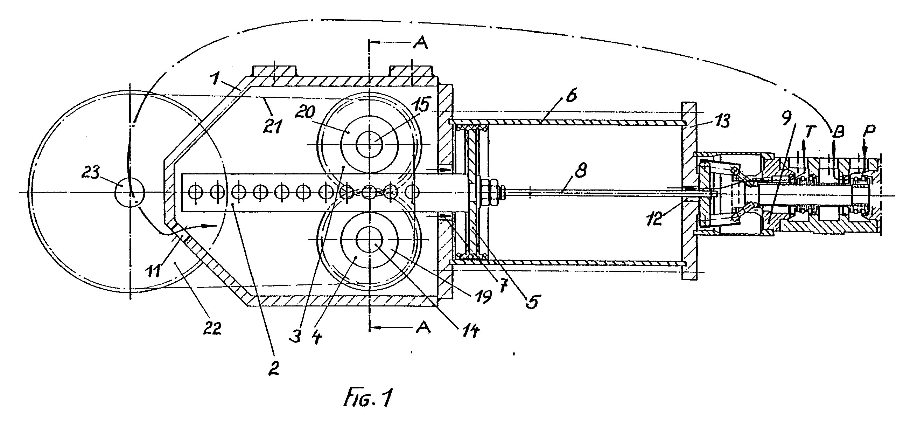

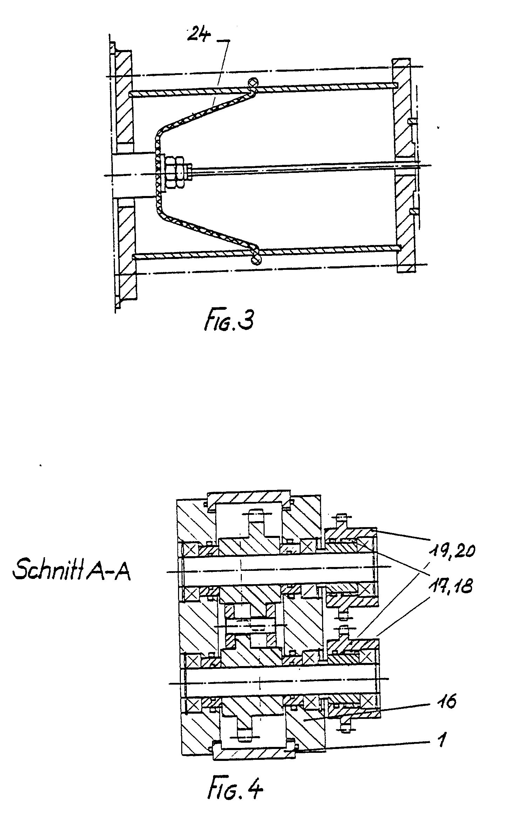

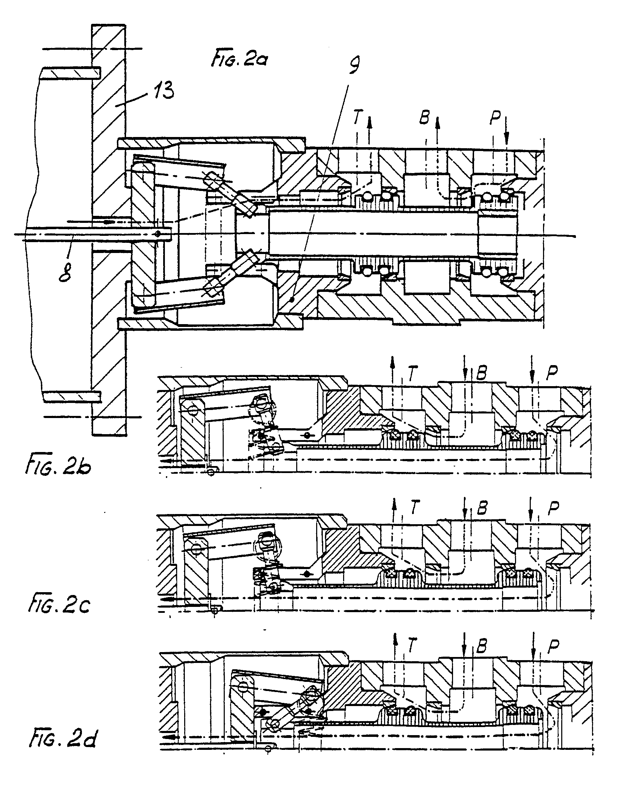

Es zeigen Fig. 1 einen Längsschnitt durch den erfindungsgemäßen Kompaktantrieb mit angeschlossenem Umsteuerventil; Fig. 2a - d mehrere Stellungen des Umsteuerventils; Fig. 3 einen Schnitt eines Details einer weiteren Ausführungsform des Antriebes und Fig. 4 einen Schnitt entlang der Linie A-A in Fig. 1.

In einem von Druckmedium, beispielsweise Druckluft oder beliebige hydraulische Medien, durchströmten Gehäuse 1 ist eine mit Triebstockrädern 3,4 zusammenwirkende Triebstockstange 2 in Längsrichtung mittig angeordnet. Diese Triebstockstange wird an einem Ende des Gehäuses aus diesem geführt und ist mit einem Kolben 5, der in einem an das Gehäuse 1 angeschlossenen Zylinder 6 geführt ist, verbunden. Durch diese Durchtrittsöffnung 7 kann auch Druckmedium in den Zylinder strömen. Der Kolben 5 ist über eine Steuerstange 8 mit einem am Zylinder 6 angeordneten Umsteuerventil 9 verbunden und wird durch dieses, und somit auch die Triebstockstange 2, in eine Hinund Herbewegung versetzt, je nach Stellung des Umsteuerventils.

In der in den Fig. 1 und 2a gezeigten Stellung des Ventils strömt von einer Druckquelle kommend Druckmedium über den Kanal P in das Ventil ein und von dort aus dem Kanal B mittels einer Leitung 10 durch die Öffnung 11 in das Gehäuse 1. Das Medium strömt weiter durch die Öffnung 7 und drückt auf den Kolben 5 des mit Druckmedium gefüllten Zylinders 6. Das im Zylinder befindliche Medium strömt über die Öffnung 12 im Zylinderdeckel 13 in das Ventil und aus diesem über den Kanal T. Die mit der Steuerstange 8 verbundene Hebelkonstruktion des Ventils 9 wird nun bewegt und ein Umschalten des Ventils bewirkt, wonach durch Änderung der Preßsitze die Beziehung der Kanäle P, B, T zueinander jener in Fig. 2d gezeigten Stellung des Umsteuerventils entspricht.

Das durch P in das Ventil eintretende Medium durchströmt nun das Ventil und tritt über die Öffnung 13 in den Zylinder 6 ein, um Druck an der zum Gehäuse gewandten Seite des Kolbens 5 auszüüben. Das im Zylinder 6 verbliebene Druckmedium fließt über die Öffnung 7 in das Gehäuse 1 und über die Öffnung 11 und 10 bei der Öffnung B in das Ventil 9 ein, um es über T wieder zu verlassen.

Die durch das ständige Umschalten in eine Hin- und Herbewegung versetzte Triebstockstange 2 überträgt diese Bewegung auf die Räder 3,4. Die im Gehäuse 1 einander gegenüberliegend angeordneten Räder 3,4 sitzen auf im Gehäuse 1 gelagerten Achsen 14,15, welche an einer Seite über einen Gehäusedeckel 16 austreten.

An der Außenseite des Gehäusedeckels sind zwei mit gegenläufige Sperrichtungen aufweisende Freiläufen 17,18 versehene Kettenritzel 19,20 angeordnet.

Durch diese Konstellation kann nun die Hinund Herbewegung in eine Drehbewegung in eine Richtung umgewandelt werden, da von den jeweils links und rechts drehenden Rädern 3,4 durch die in Gegenrichtung sperrenden Freiläufe 17,18 immer nur die Bewegung in einer Fichtung abgenommen wird. Eines der beiden Räder dreht über den Freilauf immer leer mit. Die beiden Ritzel 19,20 sind über eine Kette 21 mit einem Kettenrad 22 verbunden, welches auf einer Welle 23 sitzt, von der die Abnahme der Drehbewegung erfolgt. Fig. 3 zeigt eine in den Zylinder 6 eingesetzte Membran 24, welche den Kolben 5 ersetzt und seine Funktion übernimmt. Eine andere Ausführungsform besteht auch darin, daß beidseitig des Gehäuses 1 je ein Federbalg zur Umsteuerung der Triebstockstange angeordnet wird.

**Ansprüche**

1. Kompaktantrieb mit einer Triebstockstange und zwei mit dieser in Eingriff stehenden Triebstockrädern, dadurch gekennzeichnet, daß die Triebstockstange (2) und die -räder (3,4) in einem von Druckmedium durchströmten Gehäuse (1) angeordnet sind, daß die Triebstockstange (2) mit einer druckmediumbeaufschlagbaren Vorrichtung verbunden ist und von dieser im Gehäuse hin- und herbewegt wird, wobei das Druckmedium vom Gehäuse in die Vorrichtung strömen kann und umgekehrt, daß die Achsen (14, 15) der Triebstockräder (3,4) aus dem Gehäuse geführt sind und jede Achse außerhalb des Gehäuses ein mit einem an sich bekannten Freilauf (17,18) versehenes Ritzel (19,20) aufweist, wobei die Freiläufe unterschiedliche Sperrrichtungen haben, und daß die beiden Ritzel (19,20) mit einem Abtriebsrad (22) verbunden sind.

2. Kompaktantrieb nach Anspruch 1, dadurch gekennzeichnet, daß die Ritzel (19,20) Kettenritzel und das Abtriebsrad (22) ein Kettenrad ist und daß die Fitzel mit dem Kettenrad über eine Kette (21) verbunden sind.

3. Kompaktantrieb nach Anspruch 1, dadurch gekennzeichnet, daß die Vorrichtung ein in einem Zylinder (6) geführter Kolben (5) oder eine im Zylinder angeordnete Membran (24) ist, der (die) mit einer Steuerstange (21) verbunden ist.

4. Kompaktantrieb nach Anspruch 1, dadurch gekennzeichnet, daß die Steuerstange (21) mit einem Umsteuerventil (9) verbunden ist.

5. Kompaktantrieb nach Anspruch 4, dadurch gekennzeichnet, daß das Umsteuerventil über das Druckmedium mit dem Zylinder (6) und mit dem Gehäuse (1) in Verbindung steht.

6. Kompaktantrieb nach den Ansprüchen 1 bis 5, dadurch gekennzeichnet, daß das Gehäuse (1) im Bereich der Triebstockräder eine Öffnung (12) zum Einspeisen des vom Umsteuerventil kommenden Druckmediums hat.

Fig. 1

EP 0 408 541 A1

FIG.3

Schnitt A-A

19,20

17,18

16

1

FIG.4

Fig. 2a

Fig. 2b

Fig. 2c

Fig. 2d

## Europäisches Patentamt

# EUROPÄISCHER RECHERCHENBERICHT

Nummer der Anmeldung

**EP 90 89 0205**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 660 471 (WILLIAM D. EGLY) <br> * Ansprüche 2, 3; Figuren 1-3 * <br> - - - | 1,3 | F 16 H 19/04 <br> A 01 G 25/09 |
| A | FR-A-2 311 234 (TORNABENE MICHAEL G.) <br> * Seite 8, Zeilen 6 - 27; Figur 4 * <br> - - - | 1,2 | |
| A | FR-A-1 023 514 (JEAN-M. LE LOUER) <br> * das ganze Dokument * <br> - - - | 1,4,5 | |
| A | FR-A-1 252 634 (LE BLANC MINERAL DE PARIS) <br> * Zusammenfassung; Figuren 1-3 * <br> - - - | 1 | |
| A | FR-A-9 848 71 (MICHEL DUC) <br> * Anspruch 5; Figuren 1, 3 * <br> - - - - - | 1 | |
| | | | RECHERCHIERTE SACHGEBIETE (Int. Cl.5) . <br><br> F 16 H <br> F 01 B <br> A 01 G |

Der vorliegende Recherchenbericht wurde für alle Patentansprüche erstellt

| Recherchenort | Abschlußdatum der Recherche | Prüfer |
|---|---|---|
| Den Haag | 09 November 90 | VINGERHOETS A.J.L. |